(19) Europäisches Patentamt
European Patent Office
Office européen des brevets

(11) EP 3 237 264 B1

(12) EUROPÄISCHE PATENTSCHRIFT

(45) Veröffentlichungstag und Bekanntmachung des Hinweises auf die Patenterteilung:
12.12.2018 Patentblatt 2018/50

(51) Int Cl.:
B61H 5/00 (2006.01)    F16D 65/092 (2006.01)

(21) Anmeldenummer: 15813377.7

(22) Anmeldetag: 17.12.2015

(86) Internationale Anmeldenummer:
PCT/EP2015/080125

(87) Internationale Veröffentlichungsnummer:
WO 2016/102287 (30.06.2016 Gazette 2016/26)

(54) **BREMSBELAG FÜR EINE TEILBELAG-SCHEIBENBREMSE, ANORDNUNG EINES BREMSBELAGS AN EINEM BELAGHALTER UND VERFAHREN ZUM BETÄTIGEN EINES AN EINEM BELAGHALTER GEHALTERTEN BREMSBELAGS**

PAD FOR PARTLY LINED DISC BRAKE, BRAKE PAD ARRANGEMENT ON A SUPPORT PLATE AND METHOD FOR USING PAD ATTACHED TO A SUPPORT PLATE

GARNITURE DE FREIN À DISQUE À GARNITURE PARTIELLE, ASSEMBLAGE D'UNE GARNITURE DE FREIN AVEC UN PORTE- GARNITURE, ET PROCÉDÉ D'ACTIONNEMENT D'UN GARNITURE DE FREIN FIXÉE À UN PORTE-GARNITURE

(84) Benannte Vertragsstaaten:
AL AT BE BG CH CY CZ DE DK EE ES FI FR GB GR HR HU IE IS IT LI LT LU LV MC MK MT NL NO PL PT RO RS SE SI SK SM TR

(30) Priorität: 23.12.2014 DE 102014119491

(43) Veröffentlichungstag der Anmeldung:
01.11.2017 Patentblatt 2017/44

(73) Patentinhaber: KNORR-BREMSE
Systeme für Schienenfahrzeuge GmbH
80809 München (DE)

(72) Erfinder:
• ELSTORPFF, Marc-Gregory
80638 München (DE)
• MATHIEU, Michael
82178 Puchheim (DE)
• JUNG, Alexander
82131 Gauting (DE)
• FUDERER, Erich
82256 Fürstenfeldbruck (DE)
• LANGWADT, Marco
80992 München (DE)

(56) Entgegenhaltungen:
CN-A- 101 975 234    CN-A- 102 003 482
CN-U- 201 810 707    CN-U- 201 836 269

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung betrifft einen Bremsbelag für eine teilbelag-Scheibenbremse eines Schienenfahrzeugs gemäß dem Oberbegriff des Anspruchs 1, eine Anordnung eines solchen Bremsbelags an einem Belaghalter einer Bremsscheibenanordnung eines Schienenfahrzeugs sowie ein Verfahren zum Betätigen eines an einem Belaghalter einer Bremsscheibenanordnung eines Schienenfahrzeuges gehalterten Bremsbelags.

Ein gattungsgemäßer Bremsbelag ist in der EP 07 847 61 B1 beschrieben. Bei dem dort beschriebenen Bremsbelag wird durch eine Aufteilung der Gesamtbelagfläche in mehrere kleine Belagelemente sowie durch eine statisch bestimmte Übertragung einer Zuspannkraft eines Zangenhebels einer Scheibenbremse eines Schienenfahrzeugs auf diese Belagelemente ein sehr gleichmäßiger Wärmeeintrag in die Bremsscheibe dieser Scheibenbremse erzielt.

Weitere derartige Bremsbeläge sind auch aus der CN 102 003 482 A, der CN 101 975 234 A, der CN 201 810 707 U und der CN 201 836 269 U bekannt.

Die Kraft des Zangenhebels wird dabei von einem Belaghalter, an dem der Bremsbelag gehaltert ist, gleichmäßig auf jeweilige Hälften eines Belagträgers, an dem die Belagelemente gehaltert sind, aufgeteilt.

Die auf eine solche Hälfte des Belagträgers wirkende Kraft des Zangenhebels wird hier über jeweils drei an dem Belagträger gelagerte Trägerbleche abge stützt. Die Kraft wird dabei so aufgeteilt, dass alle Trägerbleche gleichmäßig belastet werden. Jedes der Trägerbleche wiederum teilt die von dem Zangenhebel ausgeübte Kraft wiederum gleichmäßig auf die an einem solchen Trägerblech gelagerten Belagelemente auf.

Eine solche Anordnung eines Trägerbleches mit daran über sphärische Lager gehaltenen Belagelementen wird im Folgenden als Gruppenelement bezeichnet.

Diese Gruppenelemente und auch die drei Belagelemente eines solchen Gruppenelementes liegen auf unterschiedlichen Laufkreisdurchmessern in Bezug auf die Bremsscheibe, an denen die Belagelemente bei einem Bremsvorgang anliegen.

Durch diese Positionierung der Belagelemente auf unterschiedlichen Laufkreisquerschnitten ist auch die Gleitgeschwindigkeit der Belagelemente auf der Bremsscheibe unterschiedlich groß.

Bedingt durch die unterschiedlichen Gleitgeschwindigkeiten kann es bei gleicher Flächenpressung der Belagelemente zu unterschiedlich schnellem Verschleiß der Belagelemente und damit zu einer Schrägstellung des Trägerbleches und sogar des gesamten Belaghalters kommen.

Die Lagerung der Belagelemente auf dem Trägerblech ist dabei so gestaltet, dass sie mit einer über die Fläche konstanten Flächenpressung auf der Bremsscheibe aufliegen.

Da jedoch die lokale Gleitgeschwindigkeit über der Elementfläche nicht konstant ist, neigt auch jedes der Belagelemente zu einem Schrägverschleiß.

Ist dieser Schrägverschleiß innerhalb eines Belagelementes oder auch innerhalb eines Gruppenelementes zu groß, kann dies zu einer einseitigen Anlage der Belagelemente am Trägerblech bzw. der Trägerbleche am Belagträger kommen. Dadurch wird die gewünschte gleichmäßige Kraftaufteilung beeinträchtigt, wodurch sich das Tragbild des Bremsbelages verschlechtert.

Die Leistungsfähigkeit einer Scheibenbremse ist dabei unter anderem durch die auf der Reibfläche der Bremsscheibe auftretende Oberflächentemperatur begrenzt. Damit treten bei zu hoher Oberflächentemperatur anwachsende Wärmerisse auf, die unzulässige Größen erreichen können und dadurch einen Austausch der Bremsscheibe erforderlich machen.

Je größer die Schwankungen der Oberflächentemperatur auf der Bremsscheibe sind, desto geringer ist die Wärmeenergie, die eine Bremsscheibe während einer Bremsung ohne Schädigung aufnehmen kann. Demgemäß leitet ein optimal gestalteter Bremsbelag die Wärmeenergie gleichmäßig über die gesamte Reibfläche in die Bremsscheibe ein, ohne größere Temperaturdifferenzen (beispielsweise Hotspots) auf der Oberfläche zu erzeugen.

Um die oben genannten Anforderungen zu erfüllen, sind die Bremsbeläge von Schienenfahrzeugen, insbesondere von Hochgeschwindigkeitszügen, sehr aufwändig konstruiert, so dass diese als Verschleißteil einen erheblichen Anteil an den Betriebskosten solcher Schienenfahrzeuge verursachen.

Der Verschleiß eines Bremsbelages ist unter anderem wesentlich abhängig von der Flächenpressung zwischen dem Bremsbelag und der Bremsscheibe und von der Gleitgeschwindigkeit der Bremsscheibe auf den Reibbelägen.

$$v' \sim P^\alpha \cdot v^\beta$$

mit

v':   Verschleißgeschwindigkeit
P:   Flächenpressung

v:      Gleitgeschwindigkeit

α, β:   Materialkennwerte

[Saumweber, Gerum: "Grundlagen der Schienenfahrzeugbremse", Hestra-Verlag]

Aus den oben genannten Gründen kommt es im Betrieb solcher Schienenfahrzeuge oft zu einem Schrägverschleiß der Bremsbeläge. Daher müssen diese oftmals getauscht werden, ohne dass das vorhandene Verschleißvolumen der Bremsbeläge vollständig ausgenutzt werden kann.

Aufgabe der vorliegenden Erfindung ist es, einen Bremsbelag für Schienenfahrzeuge, eine Anordnung eines solchen Bremsbelags an einem Belaghalter einer Bremsscheibenanordnung eines Schienenfahrzeugs sowie ein Verfahren zum Betätigen eines an einem Belaghalter einer Bremsscheibenanordnung eines Schienenfahrzeuges gehalterten Bremsbelags bereit zu stellen, mit dem ein über der gesamten Belagfläche möglichst gleichmäßig voranschreitender Verschleiß erreicht wird, um das vorhandene Verschleißvolumen optimal auszunutzen und ein vorzeitiges Auswechseln des Bremsbelages wegen schrägverschleißender Elemente oder Elementgruppen zu verhindern und durch Aufrechterhaltung eines gleichmäßigen Tragbildes einen gleichmäßigen Wärmeeintrag von den Belagelementen in die Bremsscheibe unabhängig vom Verschleißzustand der Belagelemente zu erhalten.

Diese Aufgabe wird durch einen Bremsbelag für ein Schienenfahrzeug mit den Merkmalen des Anspruchs 1, eine Anordnung eines solchen Bremsbelags an einem Belaghalter einer Bremsscheibenanordnung eines Schienenfahrzeugs mit den Merkmalen des Anspruch 12 sowie ein Verfahren zum Betätigen eines an einem Belaghalter einer Bremsscheibenanordnung eines Schienenfahrzeuges gehalterten Bremsbelags mit den Merkmalen des Anspruch 13 gelöst.

Bei dem erfindungsgemäßen Bremsbelag ist die Lagerung der Belagelemente über die Trägerbleche an den Belagträger derart ausgelegt, dass eine durch eine Zuspannkraft beim Anpressen der Belagelemente an eine Bremsscheibe erzeugte Flächenpressung der Belagelemente radial zur Drehachse der Bremsscheibe mit zunehmenden Abstand der Belagelemente von der Drehachse der Bremsscheibe abnimmt.

Durch die so bewirkte geringere Flächenpressung bei Belagelementen, die einer höheren Gleitgeschwindigkeit ausgesetzt sind, ergibt sich ein Ausgleich dieser beiden zur Verschleißgeschwindigkeit beitragenden Faktoren, was zu einer annähernd gleichen Verschleißgeschwindigkeit aller Belagelemente des Bremsbelages führt.

Damit wird außerdem ein gleichmäßiges Tragbild des Bremsbelages aufrecht erhalten.

Schließlich wird auch eine optimierte Ausnutzung des Verschleißvolumens des Bremsbelages erreicht.

Vorteilhafte Ausführungsvarianten der Erfindung sind Gegenstand der Unteransprüche.

Gemäß einer vorteilhaften Ausführungsvariante des erfindungsgemäßen Bremsbelages sind die Lagerelemente der Belagelemente, die die Zuspannkraft bei einem Bremsvorgang auf die Belagelemente übertragen, zum Flächenschwerpunkt der Belagelemente radial zur Drehachse der Bremsscheibe hin versetzt an den Belagelementen angeordnet.

Dadurch wird eine Flächenpressung unter den einzelnen Belagelementen eingestellt, die von der radial innenliegenden Kante zur radial außenliegenden Kante entsprechend dem Verschleißgesetz abnimmt.

Gemäß einer weiteren vorteilhaften Ausführungsvariante der Erfindung sind an dem Belagträger mehrere aus jeweils einem Trägerblech und mehreren an diesen gelagerten Belagelementen gebildete Gruppenelemente angeordnet.

Jedes dieser Gruppenelemente weist dabei bevorzugt drei Belagelemente auf.

Die Trägerbleche sind gemäß einer weiteren vorteilhaften Ausführungsvariante der Erfindung so gestaltet, dass diese Lagerelemente zur sphärischen Lagerung einen Belagträger aufweisen sowie von dem jeweiligen Lagerelement beabstandete Aussparungen, in denen die Lagerelemente der Belagelemente aufgenommen sind.

Um die mittlere Flächenpressung der Elemente eines Gruppenelementes entsprechend dem Laufkreisdurchmesser abzustimmen, an dem diese positioniert sind, sind gemäß einer vorteilhaften Ausführungsvariante der Erfindung die Trägerbleche derart geformt, dass die von den Trägerblechen auf die mit diesen gekoppelten Lagerelementen übertragene Bremskraft für jedes der Belagelemente eines Trägerbleches gleich ist, wobei die Reibfläche der Belagelemente von radial weiter außen angeordneten Belagelementen größer ist als die Reibfläche der Belagelemente von radial weiter innen angeordneten Belagelementen.

Da die Flächenpressung umgekehrt proportional zur Reibfläche der Belagelemente ist, ergibt sich durch die größere Reibfläche von radial weiter außen angeordneten Belagelementen bei gleicher beaufschlagter Bremskraft eine geringere Flächenpressung als bei dem radial der Drehachse der Bremsscheibe näher angeordneten Belagelementen mit kleinerer Reibfläche.

Gemäß einer alternativen Ausführungsvariante sind die Trägerbleche derart geformt, dass die von den Trägerblechen auf die mit diesen gekoppelten Lagerelemente übertragene Bremskraft für radial weiter außen angeordnete Belagelemente eines Trägerbleches kleiner ist als für radial weiter innen angeordnete Belagelemente eine Trägerbleches, wobei die Reibfläche aller Belagelemente gleich groß ist.

Die unterschiedliche Verteilung der auf ein solches Gruppenelement übertragenen Bremskraft wird bevorzugt dadurch erreicht, dass bei einem Trägerblech für ein Gruppenelement mit einem radial außen liegenden Belagelement das Längenverhältnis der radialen Abstände zwischen dem Lagerpunkt eines radial weiter außen angeordneten Belagelements und dem Lagerpunkt des Gruppenelements und zwischen dem Lagerpunkt eines radial weiter innen angeordneten Belagelements und dem Lagerpunkt des Gruppenelements größer als 2 ist.

Bei einem Trägerblech für ein Gruppenelement mit einem radial innen liegendem Belagelement ist das Längenverhältnis der radialen Abstände zwischen dem Lagerpunkt eines radial weiter innen angeordneten Belagelements und dem Lagerpunkt des Gruppenelements und zwischen dem Lagerpunkt eines radial weiter außen angeordneten Belagelements und dem Lagerpunkt des Gruppenelements kleiner als 2.

Die Trägerbleche selbst sind gemäß einer bevorzugten Ausführungsvariante mit sich von den Lagerelement weg erstreckenden Fingern versehen, in denen die Aussparungen zur Aufnahme der Lagerelemente der Belagelemente vorgesehen sind.

Die Anordnung der einzelnen Belagelemente erfolgt gemäß einer bevorzugten Ausführungsvariante derart, dass jeweils zwei der Belagelemente eines Gruppenelementes in einer jeweiligen etwa auf einer zur Drehachse der Bremsscheibe konzentrischen Kreislinie liegenden Aussparung der Trägerplatte aufgenommen sind.

Die erfindungsgemäße Anordnung eines Bremsbelags der Teilbelag-Scheibenbremse eines Schienenfahrzeugs an einem Belaghalter einer Bremsscheibenanordnung des Schienenfahrzeugs zeichnet sich dabei durch einen wie oben ausgebildeten Bremsbelag aus.

Nachfolgend werden Ausführungsbeispiele der Erfindungen anhand der beiliegenden Zeichnungen näher erläutert. Es zeigen:

Figur 1 und 2    perspektivische Ansichten eines an einem Belaghalter festgelegten Ausführungsvariante eines erfindungsgemäßen Bremsbelages,

Figur 3    eine perspektivische Ansicht einer bevorzugten Ausführungsvariante eines Gruppenelements eines Bremsbelags,

Figur 4 und 5    Draufsichten auf unterschiedliche Ausführungsvarianten eines erfindungsgemäßen Bremsbelags mit unterschiedlich ausgeführten Gruppenelementen mit unterschiedlich großen Belagelementen (Figur 4) und Belagelemente in gleicher Größe (Figur 5),

Figur 6    eine Schnittansicht eines Bremsbelags radial zur Drehachse einer Bremsscheibe (im eingebauten Zustand des Bremsbelages) zur Darstellung der sich radial nach außen verringernden Zuspannkraft,

Figur 7    eine Schnittansicht durch ein Belagelement des Bremsbelags in radialer Richtung zur Darstellung der radial nach außen abnehmenden Zuspannkraft und

Figur 8    eine perspektivische Ansicht eines Belaghalters einer Bremsscheibenanordnung eines Schienenfahrzeugs.

In der nachfolgenden Figurenbeschreibung beziehen sich Begriffe wie oben, unten, links, rechts, vorne, hinten usw. ausschließlich auf die in den jeweiligen Figuren gewählte beispielhafte Darstellung und Position des Bremsbelags, der Belagelemente, der Trägerbleche, des Belagträgers, des Belaghalters und anderer Teile. Diese Begriffe sind nicht einschränkend zu verstehen, das heißt, durch verschiedene Arbeitsstellungen oder die spiegelsymmetrische Auslegung oder dergleichen können sich diese Bezüge ändern.

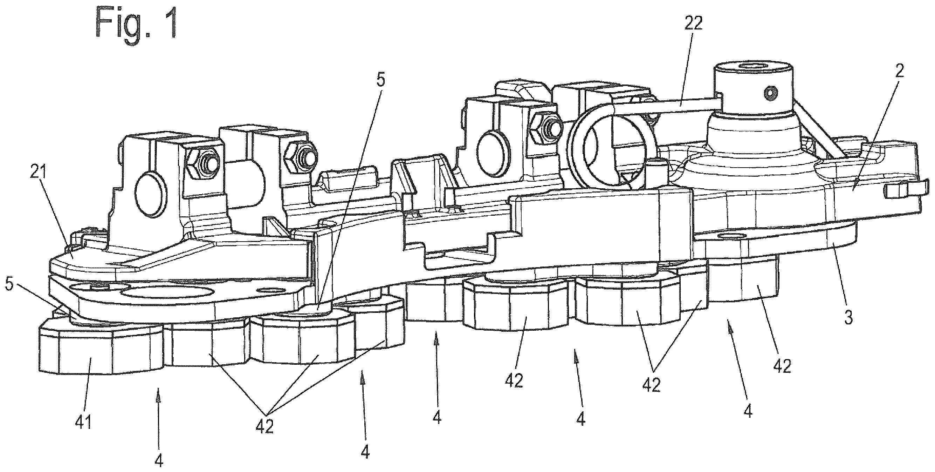

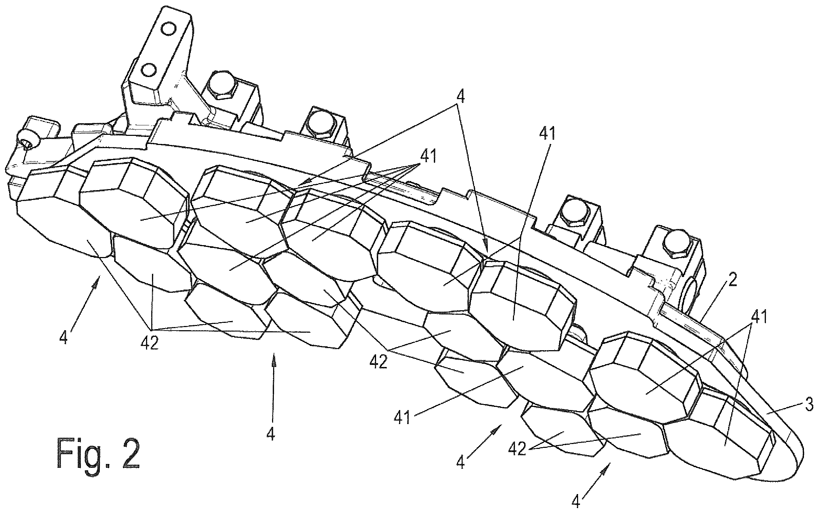

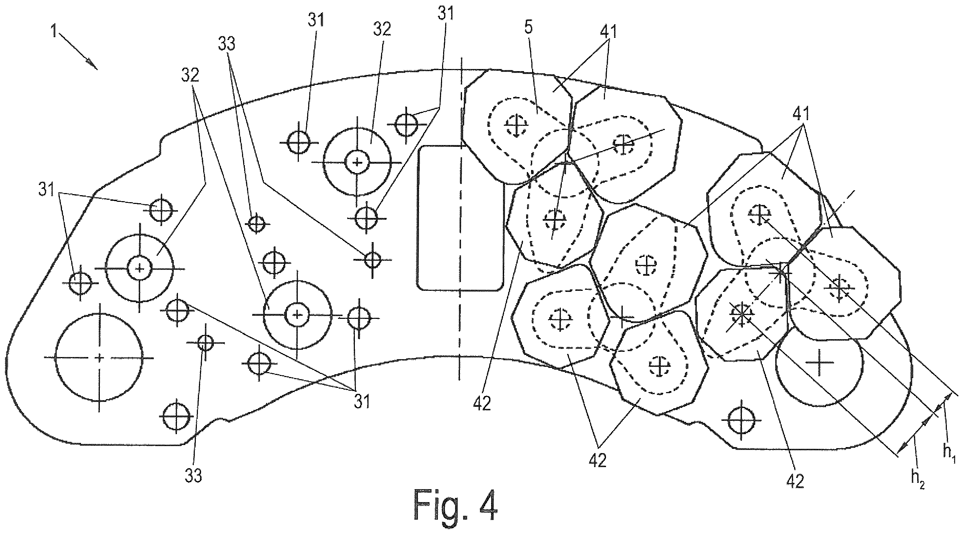

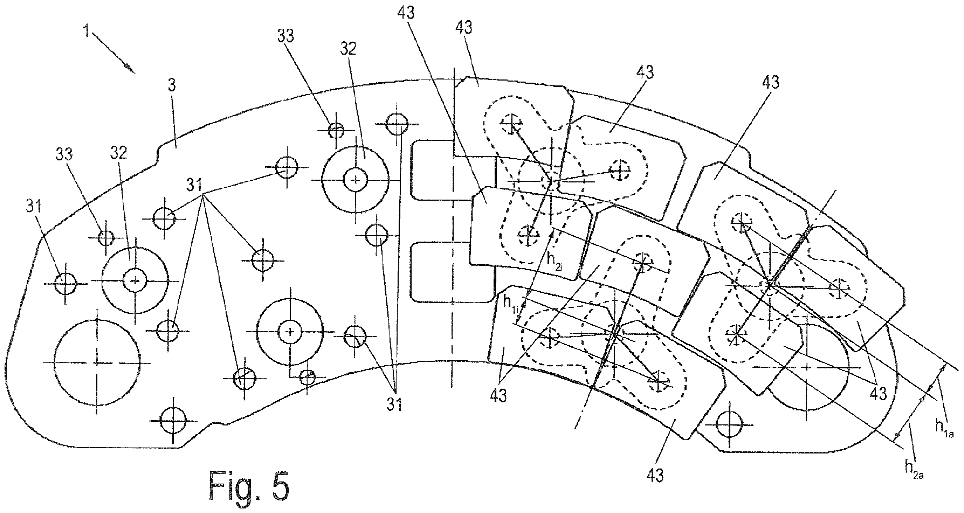

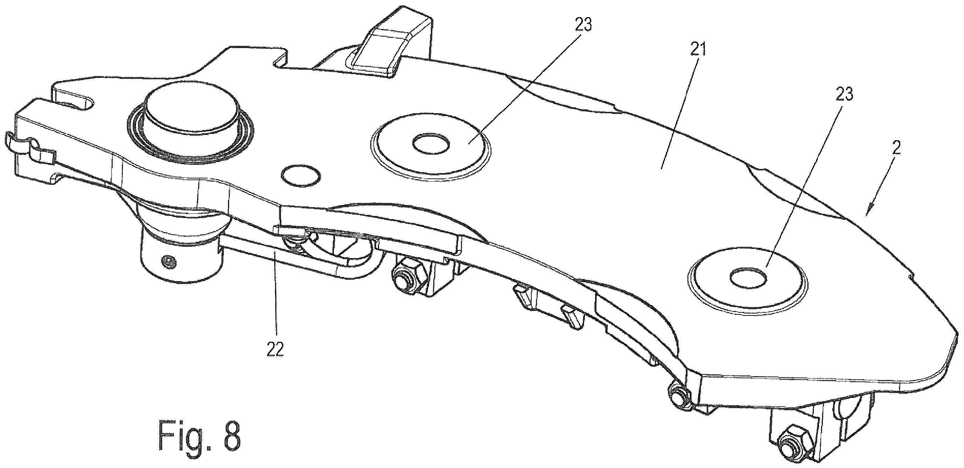

In den Figuren 4 und 5 sind mit dem Bezugszeichen 1 insgesamt zwei Ausführungsvarianten eines erfindungsgemäßen Bremsbelags bezeichnet. Ein solcher Bremsbelag 1 einer Teilbelag-Scheibenbremse eines Schienenfahrzeuges wird dabei im Einsatz an einem Belaghalter 2 festgelegt, wie in den Figuren 1 und 2 (mit einem an diesem festgelegten Bremsbelag 1) und Figur 8 (ohne Bremsbelag) gezeigt ist.

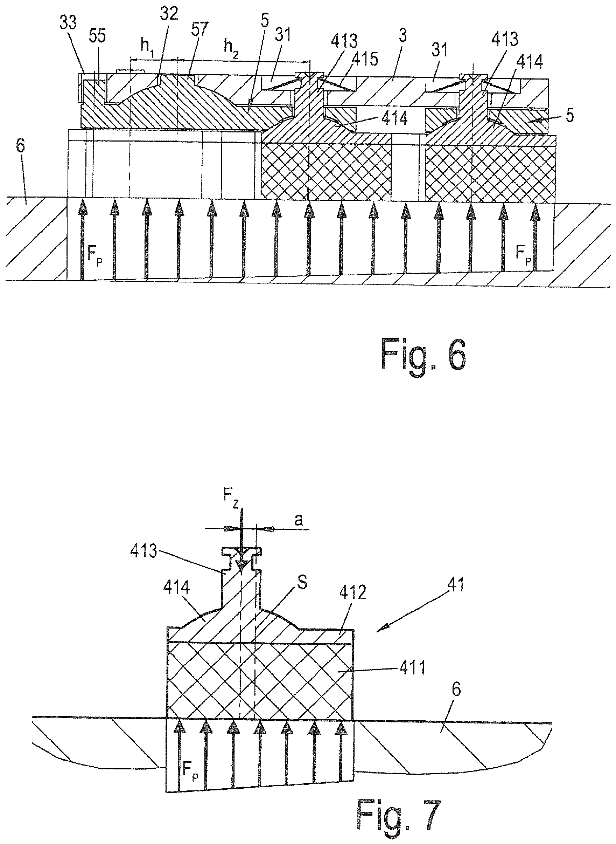

Wie in den Figuren 1, 2 und 5 zu erkennen ist, weist ein solcher Bremsbelag für eine Teilbelag-Scheibenbremse eines Schienenfahrzeugs einen an dem Belaghalter 2 festlegbaren Belagträger 3 auf sowie mehrere an dem Belagträger 3 über Trägerbleche 5 gelagerte Belagelemente 41, 42, 43. Die Belagelemente 41, 42, 43 sind dabei sphärisch an den Trägerblechen 5 gelagert. Die Trägerbleche 5 selbst sind sphärisch an dem Belagträger 3 gelagert, wie es in Figur 6 gezeigt ist.

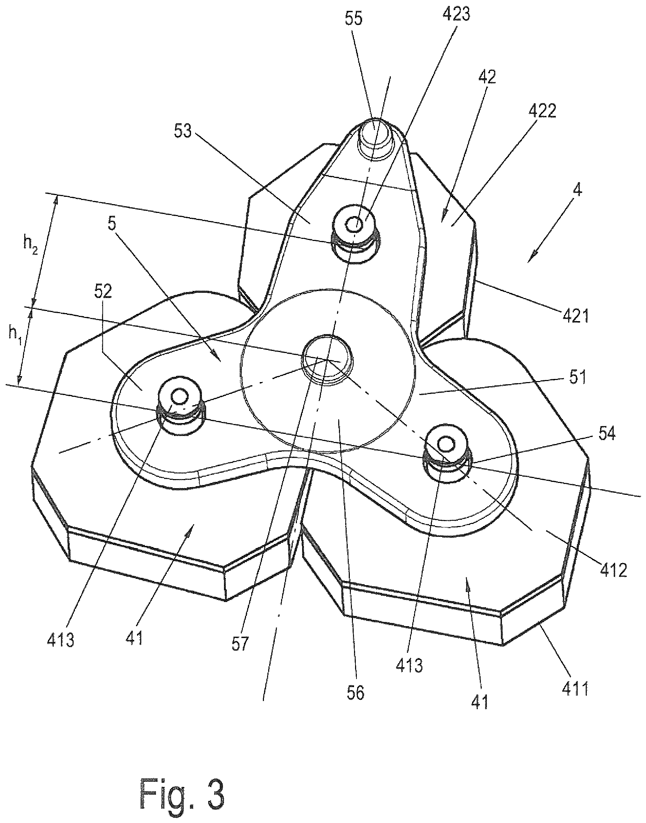

Bevorzugt sind jeweils drei der Belagelemente 41, 42, 43 an einem Trägerblech 5 angeordnet, wie es beispielhaft in Figur 3 gezeigt ist.

Die Lagerung der Belagelemente 41, 42, 43 über die Trägerbleche 5 an dem Belagträger 3 erfolgt dabei dergestalt, dass eine durch eine Zuspannkraft $F_Z$ beim Anpressen der Belagelemente 41, 42, 43 an einer Bremsscheibe 6 erzeugte Flächenpressung P der Belagelemente 41, 42, 43 radial zur Drehachse der Bremsscheibe 6 mit zunehmendem Abstand der Belagelemente 41, 42, 43 von der Drehachse der Bremsscheibe 6 abnimmt, wie es beispielhaft in Figur 6 dargestellt ist.

In Figur 6 sind mit $F_P$ bezeichnete Pfeile gezeigt, die die auf die Bremsscheibe 6 wirkende Andruckkraft auf die Belagelemente 41, 42, 43 darstellt. Wie in dieser Schnittansicht durch eine Ausführungsvariante des erfindungsgemäßen Bremsbelags 1 gezeigt ist (Schnitt radial zur Drehachse der Bremsscheibe 6), verkleinert sich die auf die Belagelemente 41, 42, 43 wirkende Anpresskraft mit zunehmendem radialem Abstand von der Drehachse der Bremsscheibe 6.

Um eine solche Verteilung der Flächenpressung zu erreichen, sind, wie beispielhaft in den Figuren 6 und 7 dargestellt, an den Reibbeläge 411 tragenden Elementträgerplatten 412 der Belagelemente 41 angeformte sphärische Flächen 414, die die bei einem Bremsvorgang auf den Bremsbelag ausgeübte Zuspannkraft $F_Z$ auf die Belagelemente 41 übertragen, derart angeordnet, dass die Zuspannkraft $F_Z$ nicht auf den Flächenschwerpunkt S des Belagelementes 41 wirkt, sondern um eine Distanz a versetzt zum Flächenschwerpunkt der Belagelemente 41 radial zur Drehachse der Bremsscheibe 6 hin angeordnet sind. Die sphärische Flächen 414 sind dabei besonders bevorzugt als kalottenförmige Erhebungen ausgebildet. Die in den Figuren 4 und 5 dargestellten weiteren Belagelemente 42, 43 sind ebenfalls mit solchen sphärische Flächen 414 versehen.

Durch diesen Versatz bedingt ergibt sich die in Figur 7 schematisch dargestellte Verteilung der Anpresskraft $F_P$ der Bremsscheibe 6 auf die Belagelemente 41, 42, 43.

Die Lagerelemente 56 der Trägerbleche 5 zur sphärischen Lagerung der Trägerbleche 5 an dem Belagträger 3 sind dabei bevorzugt als Kalotten mit sich zentral aus diesem erhebenden Nocken 57 ausgebildet, wobei die jeweiligen Lagerelemente 56 in entsprechend geformten sphärischen Ausnehmungen 32 auf der dem Belaghalter 2 abgewandten Seite des Belagträgers 3 einliegen.

Die Trägerbleche 5 selbst sind dabei, wie in Figur 3 gut zu erkennen ist, bevorzugt mit sich von dem Lagerelement 56 erstreckenden Fingern 51, 52, 53 ausgebildet, in denen die Aussparungen 54 zur Aufnahme der Lagerelemente 413,423 der Belagelemente 41, 43 vorgesehen sind.

Denkbar sind aber auch andere Formgestalten der Trägerbleche. Wichtig ist die Trägerbleche 5 so zu gestalten, dass eine Kippbewegung gegenüber dem Belaghalter 2 ermöglicht ist.

Diese Aussparungen 54 sind dabei auf ihrer der Trägerplatte 3 abgewandten, an den Belagelementen 41,42 ,43 zugewandten Seiten sphärisch geformt, wie es in Figur 6 gezeigt ist. Zentral im sphärischen Teil der Ausnehmung ist ein Durchgangsloch vorgesehen, durch das die Lagerelemente 413, 423 der Belagelemente 41, 42, 43 sich in dazu vorgesehene Ausnehmungen 31 in dem Belagträger 3 erstrecken und in diesen federelastisch mit Federelementen 415, beispielsweise in Gestalt von Tellerfedern oder Formfedern, gehaltert sind.

Die Lagerung der Trägerbleche 5 an dem Belagträger 3 erfolgt entsprechend derart, dass, wie in Figur 6 gezeigt, die Zuspannkraft auf den sphärischen Teil des Lagerelements 56 des Trägerbleches 5 wirkt.

Die Übertragung der Zuspannkraft vom Belaghalter 2 auf den Belagträger 3 erfolgt dabei bevorzugt über aus der dem Belagträger 3 zugewandten Rückseite des Belaghalters 2 vorstehende Andruckflächen 23, gezeigt in Figur 8.

Zentral aus dem sphärischen Teil des Lagerelements 56 des Trägerbleches 5 erhebt sich ein Nocken 57, der durch einen zusätzlichen Formschluss das Herausgleiten des hier als Kugelfläche ausgebildeten sphärischen Teil des Lagerelements 56 aus der Kalotte des Belagträgers 3 verhindert, falls eine unerwartet hohe Reibkraft oder eine andere, hohe und entsprechend gerichtete Kraft (z.B. durch einen Schaden an der Bremsscheibe) auftritt.

Die Aussparungen 54 zur Aufnahme der Lagerelemente 413, 423 der Belagelemente 41, 42, 43 sind dabei relativ zu dem Nocken 57 so angeordnet, dass der Abstand $h_1$ zu den Aussparungen 54 zweier der Belagelemente 41 geringer ist als der Abstand $h_2$ zu der Aussparung 54 eines Lagerelements 41 eines dritten Belagelements 42. Über die Längen $h_1$ und $h_2$ wird demgemäß die Kraftverteilung auf die drei Belagelemente 41, 42 eines Gruppenelements 4 definiert.

Wie in den Figuren 4 und 5 gut zu erkennen ist, sind vorzugsweise jeweils zwei Belagelemente 41, 42, 43 eines Gruppenelements 4 in einer jeweiligen etwa auf einer zur Drehachse der Bremsscheibe 6 konzentrischen Kreislinie angeordnet.

Neben der sphärischen Lagerung der Trägerbleche 5 über das sphärisch geformte Lagerelement 56 ist bevorzugt an einem Ende eines der Finger 51, 52, 53 ein weiterer Nocken 55 auf der dem Belagträger 3 zugeordneten Seite des Trägerblechs 5 angeformt, das sich in einer entsprechend geformte Ausnehmung 33 der Trägerplatte 3 erstreckt.

Wie in Figur 6 zu erkennen ist, ist der Nocken 55 dabei geringfügig flacher als der Nocken 57 des Lagerelements 56, was eine Wippbewegung des Trägerbleches 5 gegenüber dem Belagträger 3 im Betrieb ermöglicht. Die Wippbewegung des Trägerbleches 5 gegenüber dem Belagträger 3 und der Belagelemente 41, 42, 43 gegenüber dem Trägerblech 5 wird begrenzt durch das Spiel zwischen den jeweiligen beiden Teilen.

Wie insbesondere in Figur 4 gezeigt ist, sind die Trägerbleche 5 in einer bevorzugten Ausführungsvariante des erfindungsgemäßen Bremsbelages derart geformt, dass die von den Trägerblechen 5 auf die mit diesen gekoppelten Lagerelemente 56 übertragene Bremskraft für jedes der Belagelemente 41, 42 eines Trägerbleches 5 gleich ist, wobei die Reibfläche der Belagelemente 41, 42 von radial weiter außen angeordneten Belagelementen 41 größer ist als die Reibfläche der Belagelemente 41, 42 von radial weiter innen angeordneten Belagelementen 42.

Um eine gleichmäßige Verschleißgeschwindigkeit aller Belagelemente 41, 42, zu erreichen, wird das Flächenverhältnis $A_1 / A_2$ der an einen Trägerblech 5 unterschiedlich großen Belagelemente 41, 42 mittels der Laufkreisdurchmesser $D_1$, $D_2$, an denen jeweiligen Belagelemente am Belagträger angeordnet sind, sowie der Parameter $\alpha$ und $\beta$ aus dem Verschleißgesetz

$$A_1/ A_2 = (D_1/D_2)^{\beta/\alpha}$$

ermittelt.

Der Materialkennwert-Parameter $\alpha$ weist dabei Werte zwischen 0,6 und 1,4 auf. Werte für den Materialkennwert-Parameter $\beta$ liegen dabei zwischen 1,5 und 2,5.

Dabei ergibt sich eine geringere Flächenpressung bei den radial äußeren Belagelementen 41 aufgrund deren größerer Reibfläche bei einer gleichmäßig auf die Belagelemente 41, 42 eines Trägerbleches 5 verteilten Zuspannkraft $F_Z$.

Die Gleichverteilung der Zuspannkraft $F_Z$ auf die einzelnen Belagelemente 41, 42 erfolgt dabei durch eine geeignete Wahl der Anordnung der Belagelemente 41, 42 am Trägerblech 5.

So sind, wie in Figur 4 gezeigt, jeweils zwei Belagelemente 41, 42 gleicher Fläche eines Gruppenelements 4 auf einem Umkreis der Drehachse der Bremsscheibe 6 am Belagträger 3 angeordnet, während ein drittes Belagelement 42, 41 radial weiter innen bzw. außen angeordnet ist.

Betrachtet man das in Figur 3 dargestellte Gruppenelement 4, sind die beiden Belagelemente 41 gleicher Fläche in einem Abstand $h_1$ radial vom Lagerpunkt des Gruppenelementes 4 entfernt, während das weitere Belagelement 42 in einem Abstand $h_2$ radial vom Lagerpunkt des Gruppenelementes 4 entfernt ist. Die beiden Belagelemente 41 sind außerdem symmetrisch zu einer durch den Lagerpunkt des Gruppenelementes 4 und den Nocken 55 gelegte Symmetrieachse angeordnet. Dadurch sind die auf diese beiden Belagelemente 41 wirkende Kräfte gleich.

Für die auf das weitere Belagelement 42 wirkende Kraft gilt demnach:

$$F_{42} = 2 \cdot F_{41} \cdot \frac{h_1}{h_2}$$

Mit

$$h_2 = 2 \cdot h_1 \qquad \text{folgt} \qquad F_{42} = 2 \cdot F_{41} \cdot \frac{h_1}{2 \cdot h_1} = F_{41}$$

Bei der in Figur 5 gezeigten Ausführungsvariante weisen die einzelnen Belagelemente 43 gleich große Reibflächen auf. Die Trägerbleche 5 sind bei dieser Ausführungsvariante derart geformt, dass die von den Trägerblechen 5 auf die mit diesen gekoppelten Lagerelementen übertragene Bremskraft für radial weiter außen angeordnete Belagelemente 43 eines Trägerbleches 5 kleiner ist als für radial weiter innen angeordnete Belagelemente 43 des Trägerblechs 5.

Dies wird vorzugsweise dadurch erreicht, dass das Längenverhältnis $h_{2i}/h_{1i}$ eines Trägerbleches 5 für ein Gruppenelement 4 mit zwei radial innen liegenden Belagelementen 43 größer als 2 ist und für ein Gruppenelement 4 mit zwei radial außen liegenden Belagelementen 43 das Längenverhältnis $h_{2a}/h_{1a}$ des zugehörigen Trägerbleches 5 kleiner als 2 ist.

Bei der in Figur 5 gezeigten Ausführungsvariante ist außerdem zu erkennen, dass die Geometrie der radial der Drehachse der Bremsscheibe 6 näheren Gruppenelemente 4 eine etwas andere Geometrie aufweisen als die Gruppenelemente 4 der radial von der Drehachse der Bremsscheibe 6 weiter entfernten Gruppenelemente. Die geometrische Gestaltung der Gruppenelemente ist dabei so gewählt, dass die der Drehachse der Bremsscheibe nahen Belagelemente eines Gruppenelementes mit einer höheren Kraft beaufschlagt werden als die radial von der Drehachse der Bremsscheibe 6 weiter entfernten Belagelemente.

Auch bei dieser Ausbildungsvariante ergibt sich eine für die an einem vorbestimmten Laufkreisdurchmesser $D_1$, $D_2$ angeordneten Belagelemente 43 abgestimmte Flächenpressung P.

Das erfindungsgemäße Verfahren zum Betätigen eines an einem Belaghalter 2 einer Bremsscheibenanordnung eines Schienenfahrzeuges gehaltenen Bremsbelags 1 für eine Teilbelag-Scheibenbremse eines Schienenfahrzeuges, mit mehreren an einem Belagträger 3 über Trägerbleche 5 sphärisch gelagerten Belagelementen 41, 42, 43, zeichnet sich dadurch aus, dass bei Beaufschlagen des Bremsbelags 1 mit einer Zuspannkraft die Zuspannkraft derart auf die Belagelemente 41, 42, 43 verteilt wird, dass die auf die Belagelemente 41, 42, 43 wirkende Flächenpressung mit zunehmendem radialen Abstand von der Drehachse der Bremsscheibe 6 abnimmt.

Durch die sich mit zunehmendem Abstand von der Drehachse der Bremsscheibe 6 kontinuierlich verkleinernde Flächenpressung über sämtliche oben beschriebenen Funktionsgruppen (Belagelemente, Gruppenelemente, Gesamtbelag) ist eine Neigung zu einem Schrägverschleiß der Belagelemente wesentlich reduziert.

Dadurch wird ein gleichmäßigeres Tragbild des Bremsbelages über die gesamte Verschleißhöhe erreicht. Auch bei fortgeschrittenem Belagverschleiß ist eine gleichmäßigere Wärmeeinleitung in die Bremsscheibenoberfläche ermöglicht, wodurch sich die thermische Belastung der Bremsscheibe reduziert.

Aufgrund einer gleichmäßigeren und damit niedrigeren Oberflächentemperatur auf der Bremsscheibe ist auch der auf die Bremsenergie bezogene Verschleiß des Bremsbelages reduziert.

Der Belaghalter 2 weist auf seiner dem Belagträger 3 abgewandten Seite einen Federbügel 22 auf sowie einen durch diesen verspannbaren Bolzen, welcher durch eine Platte 21 des Belaghalters 2 hindurch in eine dazu vorgesehene Ausnehmung im Belagträger 3eingreift.

**Bezugszeichenliste**

1     Bremsbelag

2     Belaghalter
21    Platte
22    Federbügel

3     Belagträger
31    Aussparung
32    sphärische Ausnehmung
33    Ausnehmung

4     Gruppenelement
41    Belagelement
411   Reibbelag
412   Elementträgerplatte
413   Lagerelement
414   sphärische Fläche
415   Federelement
42    Belagelement
423   Lagerelement
43    Belagelement

5     Trägerblech
51    Finger
52    Finger
53    Finger
54    Aussparung
55    Nocken
56    Lagerelemente
57    Nocken

6     Bremsscheibe

$h_1$:     radialer Abstand
$h_2$:     radialer Abstand
$h_{1i}$:    radialer Abstand
$h_{2i}$:    radialer Abstand
$h_{1a}$:   radialer Abstand
$h_{2a}$:   radialer Abstand

a:     Distanz

$F_Z$: Zustellkraft
$F_P$: Andruckkraft
P: Flächenpressung
S: Flächenschwerpunkt

**Patentansprüche**

1. Bremsbelag für eine Teilbelag-Scheibenbremse eines Schienenfahrzeuges, aufweisend

   - einen Belagträger (3),
   - mehrere an dem Belagträger (3) über Trägerbleche (5) gelagerte Belagelemente (41, 42, 43),
   - wobei die Trägerbleche (5) sphärisch an dem Belagträger (3) gelagert sind,
   - wobei die Belagelemente (41, 42, 43) sphärisch an den Trägerblechen (5) gelagert sind,

   **dadurch gekennzeichnet, dass**

   - die Lagerung der Belagelemente (41, 42, 43) über die Trägerbleche (5) an dem Belagträger (3) derart ausgelegt ist, dass eine durch eine Zuspannkraft beim Anpressen der Belagelemente (41, 42, 43) an eine Bremsscheibe (6) erzeugte Flächenpressung (P) der Belagelemente (41, 42, 43) radial zur Drehachse der Bremsscheibe (6) mit zunehmendem Abstand der Belagelemente (41, 42, 43) von der Drehachse der Bremsscheibe (6) abnimmt.

2. Bremsbelag nach Anspruch 1, **dadurch gekennzeichnet, dass** sphärisch gewölbte Flächen (414) der Belagelemente (41, 42, 43), die die Zuspannkraft bei einem Bremsvorgang auf die Belagelemente (41, 42, 43) übertragen, zum Flächenschwerpunkt der Belagelemente (41, 42, 43) radial zur Drehachse der Bremsscheibe (6) hin versetzt an den Belagelementen (41, 42, 43) angeordnet sind.

3. Bremsbelag nach Anspruch 1 oder 2, **dadurch gekennzeichnet, dass** an dem Belagträger (3) mehrere aus jeweils einem Trägerblech (5) und mehreren an diesem gelagerten Belagelementen (41, 42, 43) gebildete Gruppenelemente (4) angeordnet sind.

4. Bremsbelag nach Anspruch 3, **dadurch gekennzeichnet, dass** jedes der Gruppenelemente (4) drei Belagelemente (41, 42, 43) aufweist.

5. Bremsbelag nach einem der Ansprüche 3 oder 4, **dadurch gekennzeichnet, dass** die Trägerbleche (5) Lagerelemente (56) zur sphärische Lagerung an dem Belagträger (3) aufweisen sowie von dem jeweiligen Lagerelement (56) beabstandete Aussparungen (54), in denen die Lagerelemente (413, 423) der Belagelemente (41, 42, 43) aufgenommen sind.

6. Bremsbelag nach einem der vorstehenden Ansprüche, **dadurch gekennzeichnet, dass** die Trägerbleche (5) derart geformt sind, dass die von den Trägerblechen (5) auf die mit diesen gekoppelten sphärisch gewölbten Flächen (414) übertragene Bremskraft für jedes der Belagelemente (41, 42) eines Trägerbleches (5) gleich ist, wobei die Reibfläche der Belagelemente (41, 42) von radial weiter außen angeordneten Belagelementen (41) größer ist als die Reibfläche der Belagelemente (41, 42) von radial weiter innen angeordneten Belagelementen (42).

7. Bremsbelag nach einem der vorstehenden Ansprüche, **dadurch gekennzeichnet, dass** die Trägerbleche (5) derart geformt sind, dass die von den Trägerblechen (5) auf die mit diesen gekoppelten sphärisch gewölbte Flächen (434) übertragene Bremskraft für radial weiter außen angeordnete Belagelemente (43) eines Trägerbleches (5) kleiner ist als für radial weiter innen angeordnete Belagelemente (43) eines Trägerbleches (5), wobei die Reibfläche aller Belagelemente (43) gleich groß ist.

8. Bremsbelag nach Anspruch 7, **dadurch gekennzeichnet, dass** bei einem Trägerblech (5) eines Gruppenelementes (4) mit einem radial außen liegendem Belagelement (43) das Längenverhältnis ($h_{2i}/h_{1i}$) der radialen Abstände ($h_{2i}, h_{1i}$) zwischen dem Lagerpunkt eines radial weiter außen angeordneten Belagelements (43) und dem Lagerpunkt des Gruppenelementes (4) und zwischen dem Lagerpunkt eines radial weiter innen angeordneten Belagelements (43) und dem Lagerpunkt des Gruppenelementes (4) größer als 2 ist.

9. Bremsbelag nach Anspruch 7 oder 8, **dadurch gekennzeichnet, dass** bei einem Trägerblech (5) eines Gruppenelementes (4) mit einem radial innen liegendem Belagelement (43) das Längenverhältnis ($h_{2a}$/$h_{1a}$) der radialen Abstände($h_{2a}$,$h_{1a}$) zwischen dem Lagerpunkt eines radial weiter innen angeordneten Belagelements (43) und dem Lagerpunkt des Gruppenelementes (4) und zwischen dem Lagerpunkt eines radial weiter außen angeordneten Belagelements (43) und dem Lagerpunkt des Gruppenelementes (4) kleiner als 2 ist.

10. Bremsbelag nach einem der vorhergehenden Ansprüche, **dadurch gekennzeichnet, dass** die Trägerbleche (5) sich von dem Lagerelement (56) weg erstreckende Finger (51, 52, 53) aufweisen, in denen die Aussparungen (54) zur Aufnahme der Lagerelemente (413, 423) der Belagelemente (41, 42, 43) vorgesehen sind.

11. Bremsbelag nach einem der vorhergehenden Ansprüche, **dadurch gekennzeichnet, dass** jeweils zwei der Belagelemente (41, 42, 43) eines Gruppenelementes (4 etwa auf einer zur Drehachse der Bremsscheibe (6) konzentrischen Kreislinie ausgerichtet sind.

12. Anordnung eines Bremsbelags (1) für eine Teilbelag-Scheibenbremse eines Schienenfahrzeuges an einem Belaghalter (2) einer Bremsscheibenanordnung eines Schienenfahrzeuges, **dadurch gekennzeichnet, dass** der Bremsbelag (1) gemäß einem der vorhergehenden Ansprüche ausgebildet ist.

13. Verfahren zum Betätigen eines an einem Belaghalter (2) einer Bremsscheibenanordnung eines Schienenfahrzeuges gehalterten Bremsbelags (1) für eine Teilbelag-Scheibenbremse eines Schienenfahrzeuges, mit mehreren an einem Belagträger (3) über Trägerbleche (5) sphärisch gelagerten Belagelementen (41, 42, 43), **dadurch gekennzeichnet, dass** bei Beaufschlagen des Bremsbelags (1) mit einer Zuspannkraft die Zuspannkraft derart auf die Belagelemente (41, 42, 43) verteilt wird, dass die auf die Belagelemente (41, 42, 43) wirkende Flächenpressung mit zunehmendem radialen Abstand von einer Drehachse der Bremsscheibe (6) abnimmt.

## Claims

1. A brake lining for a partially lined disk brake of a rail vehicle, having

   - a lining carrier (3),
   - a plurality of lining elements (41, 42, 43) which are mounted on the lining carrier (3) via carrier plates (5),
   - the carrier plates (5) being mounted spherically on the lining carrier (3),
   - the lining elements (41, 42, 43) being mounted spherically on the carrier plates (5),

   **characterized in that**

   - the mounting of the lining elements (41, 42, 43) via the carrier plates (5) on the lining carrier (3) is designed in such a way that a surface pressure (P) of the lining elements (41, 42, 43) which is produced by way of a brake application force during pressing of the lining elements (41, 42, 43) onto a brake disk (6) decreases radially with respect to the rotational axis of the brake disk (6) at an increasing spacing of the lining elements (41, 42, 43) from the rotational axis of the brake disk (6).

2. The brake lining as claimed in claim 1, **characterized in that** spherically curved faces (414) of the lining elements (41, 42, 43) which transmit the brake application force to the lining elements (41, 42, 43) during a braking operation are arranged on the lining elements (41, 42, 43) such that they are offset with respect to the centroid of the lining elements (41, 42, 43) radially toward the rotational axis of the brake disk (6).

3. The brake lining as claimed in claim 1 or 2, **characterized in that** a plurality of group elements (4) which are formed from in each case one carrier plate (5) and a plurality of lining elements (41, 42, 43) which are mounted on it are arranged on the lining carrier (3).

4. The brake lining as claimed in claim 3, **characterized in that** each of the group elements (4) has three lining elements (41, 42, 43).

5. The brake lining as claimed in either of claims 3 and 4, **characterized in that** the carrier plates (5) have bearing elements (56) for spherical mounting on the lining carrier (3), and cutouts (54) which are spaced apart from the respective bearing element (56) and in which the bearing elements (413, 423) of the lining elements (41, 42, 43) are received.

**6.** The brake lining as claimed in one of the preceding claims, **characterized in that** the carrier plates (5) are shaped in such a way that the brake force which is transmitted from the carrier plates (5) to the spherically curved faces (414) which are coupled to them is identical for each of the lining elements (41, 42) of a carrier plate (5), the friction face of the lining elements (41, 42) of lining elements (41) which are arranged radially further to the outside being larger than the friction face of the lining elements (41, 42) of lining elements (42) which are arranged radially further to the inside.

**7.** The brake lining as claimed in one of the preceding claims, **characterized in that** the carrier plates (5) are shaped in such a way that the brake force which is transmitted from the carrier plates (5) to the spherically curved faces (434) which are coupled to them is lower for lining elements (43) of a carrier plate (5) which are arranged radially further to the outside than for lining elements (43) of a carrier plate (5) which are arranged radially further to the inside, the friction face of all lining elements (43) being of identical size.

**8.** The brake lining as claimed in claim 7, **characterized in that**, in the case of a carrier plate (5) of a group element (4) with a lining element (43) which lies radially on the outside, the length ratio ($h_{2i}/h_{1i}$) of the radial spacings ($h_{2i}$, $h_{1i}$) between the bearing point of a lining element (43) which is arranged radially further to the outside and the bearing point of the group element (4) and between the bearing point of a lining element (43) which is arranged radially further to the inside and the bearing point of the group element (4) is greater than 2.

**9.** The brake lining as claimed in claim 7 or 8, **characterized in that**, in the case of a carrier plate (5) of a group element (4) with a lining element (43) which lies radially on the inside, the length ratio ($h_{2a}/h_{1a}$) of the radial spacings ($h_{2a}$, $h_{1a}$) between the bearing point of a lining element (43) which is arranged radially further to the inside and the bearing point of the group element (4) and between the bearing point of a lining element (43) which is arranged radially further to the outside and the bearing point of the group element (4) is lower than 2.

**10.** The brake lining as claimed in one of the preceding claims, **characterized in that** the carrier plates (5) have fingers (51, 52, 53) which extend away from the bearing element (56) and in which the cutouts (54) for receiving the bearing elements (413, 423) of the lining elements (41, 42, 43) are provided.

**11.** The brake lining as claimed in one of the preceding claims, **characterized in that** in each case two of the lining elements (41, 42, 43) of a group element (4) are oriented approximately on a circle line which is concentric with respect to the rotational axis of the brake disk (6).

**12.** An arrangement of a brake lining (1) for a partially lined disk brake of a rail vehicle on a lining holder (2) of a brake disk arrangement of a rail vehicle, **characterized in that** the brake lining (1) is configured in accordance with one of the preceding claims.

**13.** A method for actuating a brake lining (1) for a partially lined disk brake of a rail vehicle, which brake lining (1) is secured on a lining holder (2) of a brake disk arrangement of a rail vehicle, having a plurality of lining elements (41, 42, 43) which are mounted spherically via carrier plates (5) on a lining carrier (3), **characterized in that**, when the brake lining (1) is loaded with a brake application force, the brake application force is distributed to the lining elements (41, 42, 43) in such a way that the surface pressure which acts on the lining elements (41, 42, 43) decreases at an increasing radial spacing from a rotational axis of the brake disk (6).

**Revendications**

**1.** Garniture de frein pour un frein à disque à sous-garniture d'un véhicule ferroviaire, comportant

   - un porte-garniture (3),
   - plusieurs éléments (41, 42, 43) de garniture, montés sur le porte-garniture (3) par des tôles (5) de support,
   - dans laquelle les tôles (5) de support sont montées de manière sphérique sur le porte-garniture (3),
   - dans laquelle les éléments (41, 42, 43) de garniture sont montés de manière sphérique sur les tôles (5) de support,

   **caractérisée en ce que**

   - le montage des éléments (41, 42, 43) de garniture sur le porte-garniture (3), par les tôles (5) de support, est conçu de manière à ce qu'une pression (P) de surface, produite par une force de serrage lors de l'application des éléments (41, 42, 43) de garniture à un disque (6) de frein, des éléments (41, 42, 43) de garniture, radialement à l'axe de rotation du dique (6) de frein, diminue au fur et à mesure qu'augmente la distance des éléments (41, 42, 43) de garniture à l'axe de rotation du disque (6) de frein.

2. Garniture de frein suivant la revendication 1, **caractérisée en ce que** des surfaces (414), cintrées sphériquement, des éléments (41,42, 43) de garniture, qui transmettent la force de serrage lors d'une opération de freinage aux éléments (41, 42, 43) de garniture, sont disposées sur les éléments (41, 42, 43)- de garniture au centre-de gravité en surface des éléments (41, 42, 43) de garniture, en étant décalées radialement vers l'axe de rotation du disque (6) de frein.

3. Garniture de frein suivant la revendication 1 ou 2, **caractérisée en ce que**, sur le porte-garniture (3), sont disposés plusieurs éléments (4) de groupe, formés chacun d'une tôle (5) de support et de plusieurs éléments (41, 42, 43) de garniture montés sur celle-ci.

4. Garniture de frein suivant la revendication 3, **caractérisée en ce que** chacun des éléments (4) de groupe a trois éléments (41, 42, 43) de garniture.

5. Garniture de frein suivant l'une des revendications 3 ou 4, **caractérisée en ce que** les tôles (5) de support ont des éléments (56) de palier pour le montage sphérique sur le support de garniture (3), ainsi que des évidements (54) à distance de l'élément (56) de palier respectif, dans lesquels les éléments (413, 423) de palier des éléments (41, 42, 43) de garniture, sont reçus.

6. Garniture de frein suivant l'une des revendications précédentes, **caractérisée en ce que** les tôles (5) de support sont conformées de manière à ce que la force de freinage, transmise par les tôles (5) de support aux surfaces (415) cintrées sphériquement, qui leur sont couplées, soit la même pour chacun des éléments (41, 42) de garniture d'une tôle (5) de support, la surface de friction d'éléments (41, 42) de garniture disposés à l'extérieur plus loin radialement, étant plus grande que la surface de friction d'éléments (41, 42) de garniture disposés plus loin vers l'intérieur radialement.

7. Garniture de frein suivant l'une des revendications précédentes, **caractérisée en ce que** les tôles (5) de support sont conformées de manière à ce que la force de freinage, transmise par les tôles (5) de support aux surfaces (434) cintrées sphériquement qui leur sont couplées, soit plus petite pour des éléments (43) de garniture disposés plus loin à l'extérieur radialement d'une tôle (5) de support, que pour des éléments (43) de garniture disposés plus loin à l'intérieur radialement d'une tôle (5) de support, la surface de friction étant égale pour tous les éléments (43) de garniture.

8. Garniture de frein suivant la revendication 7, **caractérisée en ce que**, pour une tôle (5) de support d'un élément (4) de groupe, ayant un élément (43) de garniture se trouvant à l'extérieur radialement, le rapport ($h_{2i}/h_{1i}$) de longueur des distances ($h_{2i}/h_{1i}$) radiales, entre le point de palier d'un élément (43) de garniture monté plus loin à l'extérieur radialement et le point de palier de l'élément (4) de groupe, et entre le point de palier d'un élément (43) de garniture monté plus loin à l'intérieur radialement et le point de palier de l'élément (4) de groupe, est plus grand que 2.

9. Garniture de frein suivant la revendication 7 ou 8, **caractérisée en ce que**, pour une tôle (5) de support d'un élément (4) de groupe, ayant un élément (43) de garniture se trouvant à l'intérieur radialement, le rapport ($h_{2a}/h_{1a}$) de longueur des distances ($h_{2a}/h_{1a}$) radiales entre le point de palier d'un élément (43) de garniture monté plus loin à l'intérieur radialement, et le point de palier de l'élément (4) de groupe, et entre le point de palier d'un élément (43) de garniture disposé plus loin à l'extérieur radialement et le point de palier de l'élément (4) de groupe, est plus petit que 2.

10. Garniture de frein suivant l'une des revendications précédentes, **caractérisée en ce que** les tôles (5) de support ont des doigts (51, 52, 53), qui s'éloignent de l'élément (56) de support et dans lesquels sont prévus les évidements (54) de réception des éléments (413, 423) de palier des éléments (41, 42, 43) de garniture.

11. Garniture de frein suivant l'une des revendications précédentes, **caractérisée en ce que**, respectivement, deux des éléments (41, 42, 43) de garniture d'un élément (4) de groupe sont orientés à peu près sur une ligne circulaire concentrique à l'axe de rotation du disque (6) de frein.

12. Système d'une garniture (1) de frein pour un frein à disque à garniture partielle d'un véhicule ferroviaire sur un fixeur (2) de garniture d'un système de frein à disque d'un véhicule ferroviaire, **caractérisé en ce que** la garniture (1) de frein est constituée suivant l'une des revendications précédentes.

13. Procédé d'actionnement d'une garniture (1) de frein fixée sur un fixeur (2) de garniture d'un système de frein à disque d'un véhicule ferroviaire pour un frein à disque à garniture partielle d'un véhicule ferroviaire, comprenant plusieurs éléments (41, 42, 43) de garniture montés de manière sphérique sur un porte-garniture (3) par des tôles (5) de support, **caractérisé en ce que**, lorsque la garniture (1) de frein est soumise à une force de serrage, on répartit la force de serrage sur les éléments (41, 42, 43) de garniture, de manière à ce que la pression de surface, agissant sur les éléments (41, 42, 43) de garniture, diminue au fur et à mesure qu'augmente la distance radiale à un axe de rotation du disque (6) de frein.

Fig. 1

Fig. 2

Fig. 3

Fig. 4

Fig. 5

Fig. 6

Fig. 7

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0784761 B1
- CN 102003482 A
- CN 101975234 A
- CN 201810707 U
- CN 201836269 U